# EUROPEAN PATENT APPLICATION

(11) **EP 4 398 271 A1**
(43) Date of publication of application: **10.07.2024**
(21) Application number: 22864356.5
(22) Date of filing: 24.08.2022
(51) Int. Cl.: H01B 13/00, C01B 35/12, H01B 1/06, H01B 1/08, H01M 4/40, H01M 4/48, H01M 4/485, H01M 4/505, H01M 4/525, H01M 4/58, H01M 4/62, H01M 10/052, H01M 10/0562, H01M 10/0585

(54) **LITHIUM ION CONDUCTIVE SOLID ELECTROLYTE MATERIAL, LITHIUM ION CONDUCTIVE SOLID ELECTROLYTE, METHOD FOR PRODUCING SAID LITHIUM ION CONDUCTIVE SOLID ELECTROLYTE MATERIAL, METHOD FOR PRODUCING SAID LITHIUM ION CONDUCTIVE SOLID ELECTROLYTE, AND ALL-SOLID-STATE BATTERY**

(30) Priority: 30.08.2021 JP 2021139922
(71) Applicant: Resonac Corporation, Tokyo 105-7325 (JP)
(72) Inventor: SEI, Ryosuke, Tokyo 105-8518 (JP); LEE, Kunchan, Tokyo 105-8518 (JP)
(74) Representative: Strehl Schübel-Hopf & Partner
(86) International application number: PCT/JP2022/031814
(87) International publication number: WO 2023/032772

(57) **Abstract**

One embodiment of the present invention relates to a lithium ion conductive solid electrolyte material, a lithium ion conductive solid electrolyte, a method for producing the same, or an all-solid-state battery; and the method for producing a lithium ion conductive solid electrolyte material having a crystal structure based on LiTa₂PO₈ and having at least Li, Ta, P, O, and Zr as constituent elements, comprises: a primary pulverization step of pulverizing a raw material to obtain a primary pulverized product, a firing step of firing the primary pulverized product to obtain a primary fired product, and a secondary pulverization step of pulverizing the primary fired product by using a ball mill to obtain a lithium ion conductive solid electrolyte material, wherein, in the secondary pulverization step, a zirconia ball with a diameter of larger than 1 mm and smaller than 10 mm is used, and a half-width of a diffraction peak of the lithium ion conductive solid electrolyte material, derived from a crystal structure based on LiTa₂PO₈ and having the maximum intensity observed in a range of 20° ≤ 2θ ≤ 40° in X-ray diffraction, is 0.160° or more.

## Description

### Technical Field

One embodiment of the present invention relates to a lithium ion conductive solid electrolyte material, a lithium ion conductive solid electrolyte, a method for producing the lithium ion conductive solid electrolyte material, a method for producing the lithium ion conductive solid electrolyte, or an all-solid-state battery.

### Background Art

In recent years, there has been a demand for the development of a high output and high capacity battery as a power source for, for example, a notebook computer, a tablet terminal, a cellphone, a smartphone or an electric vehicle (EV). Among these, an all-solid-state battery using a solid electrolyte instead of a liquid electrolyte such as an organic solvent has attracted attention as a battery having excellent charge/discharge efficiency, charging speed, safety, and productivity.

As the solid electrolyte, an inorganic solid electrolyte has attracted attention, and as the inorganic solid electrolyte, oxide and sulfide solid electrolytes are mainly known.

When a sulfide solid electrolyte is used, there are advantages such as being able to manufacture a battery by, for example, cold pressing, but it is unstable to humidity and harmful hydrogen sulfide gas may be generated, and thus from the viewpoint of, for example, safety, the development of an oxide solid electrolyte (for example, Patent Literatures 1 and 2) is underway.

### Citation List

### Patent Literature

[Patent Literature 1] WO2020/036290
[Patent Literature 2] JP2020-194773A

### Summary of Invention

### Technical Problem

The oxide solid electrolyte has extremely high grain boundary resistance, and in order to obtain an ion conductivity sufficient for use in all-solid-state batteries, it is necessary not only to press-molding a powder of a solid electrolyte material but also to sinter it to increase a relative density (percentage of its actual density to its theoretical density).

However, it was found that a long sintering time of 12 hours or longer was necessary to obtain a solid electrolyte with a high relative density from the conventional solid electrolyte materials such as those described in the Patent Literatures 1 and 2, and this has had room for improvement in this respect.

One embodiment of the present invention provides a lithium ion conductive solid electrolyte material capable of obtaining a lithium ion conductive solid electrolyte with a high relative density and excellent reliability even in a short sintering time of shorter than 12 hours. One embodiment of the present invention also provides a method for producing the lithium ion conductive solid electrolyte material by a method excellent in its productivity.

### Solution to Problem

The present inventors have carried out diligent studies and as a result, have found that the above problem can be solved according to the following configuration examples, and have completed the present invention.

The configuration examples of the present invention are as follows.

[1] A method for producing a lithium ion conductive solid electrolyte material having a crystal structure based on LiTa₂PO₈ and having at least lithium, tantalum, phosphorus, oxygen, and zirconium as constituent elements, the method comprising:
   a primary pulverization step of pulverizing a raw material substance to obtain a primary pulverized product, a firing step of firing the primary pulverized product to obtain a primary fired product, and a secondary pulverization step of pulverizing the primary fired product by using a ball mill to obtain a lithium ion conductive solid electrolyte material,
   wherein, in the secondary pulverization step, a zirconia ball with a diameter of larger than 1 mm and smaller than 10 mm is used, and
   a half-width of a diffraction peak of the lithium ion conductive solid electrolyte material, derived from a crystal structure based on LiTa₂PO₈ and having the maximum intensity observed in a range of 20° ≤ 2Θ ≤ 40° in X-ray diffraction, is 0.160° or more.
[2] The method for producing a lithium ion conductive solid electrolyte material according to [1], wherein the raw material substance is free of zirconium.
[3] A method for producing a lithium ion conductive solid electrolyte, comprising a sintering step of sintering the lithium ion conductive solid electrolyte material obtained by the method for producing a lithium ion conductive solid electrolyte material according to [1] or [2] to obtain a lithium ion conductive solid electrolyte,
   wherein a relative density that is a percentage of a ratio of the measured density calculated from the mass and the volume of the lithium ion conductive solid electrolyte to a theoretical density of the lithium ion conductive solid electrolyte is 75.0% or more.
[4] A lithium ion conductive solid electrolyte material,
   having a crystal structure based on LiTa₂PO₈, and
   having at least lithium, tantalum, phosphorus, oxygen, and zirconium as constituent elements,
   wherein a half-width of a diffraction peak having the maximum intensity observed in a range of 20° ≤ 2θ ≤ 40° in X-ray diffraction is 0.160° or more, and
   a zirconium content is more than 0% by atom and 3.0% by atom or less.
[5] The lithium ion conductive solid electrolyte material according to [4], further having a boron element.
[6] A lithium ion conductive solid electrolyte,
   having a crystal structure based on LiTa₂PO₈, and
   having at least lithium, tantalum, phosphorus, oxygen, and zirconium as constituent elements,
   wherein a relative density that is a percentage of a ratio of the measured density calculated from the mass and the volume of the lithium ion conductive solid electrolyte to a theoretical density of the lithium ion conductive solid electrolyte is 75.0% or more.
[7] The lithium ion conductive solid electrolyte according to [6], further having a boron element.
[8] An all-solid-state battery, comprising:
   a positive electrode having a positive electrode active material;
   a negative electrode having a negative electrode active material; and
   a solid electrolyte layer between the positive electrode and the negative electrode,
   wherein the solid electrolyte layer comprises the lithium ion conductive solid electrolyte according to [6] or [7].
[9] The all-solid-state battery according to [8], wherein
   the positive electrode active material comprises one or more compounds selected from the group consisting of LiM3PO₄ wherein M3 is one or more elements selected from the group consisting of Mn, Co, Ni, Fe, Al, Ti, and V, or two elements V and O, LiM5VO₄ wherein M5 is one or more elements selected from the group consisting of Fe, Mn, Co, Ni, Al and Ti; Li₂M6P₂O₇ wherein M6 is one or more elements selected from the group consisting of Fe, Mn, Co, Ni, Al, Ti and V, or two elements V and O; LiVP₂O₇, Liₓ₇V_{y7}M7_{z7} wherein 2 ≤x7 ≤4, 1≤ y7 ≤3, 0 ≤ z7 ≤1, 1 ≤ y7+z7 ≤3, and M7 is one or more elements selected from the group consisting of Ti, Ge, Al, Ga and Zr; Li₁₊ₓ₈Alₓ₈M8₂₋ₓ₈(PO₄)₃ wherein 0 ≤ x8 ≤ 0.8, and M8 is one or more elements selected from the group consisting of Ti and Ge; LiNi_{1/3}Co_{1/3}Mn_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂.
[10] The all-solid-state battery according to [8] or [9], wherein
   the negative electrode active material comprises one or more compounds selected from the group consisting of LiM3PO₄ wherein M3 is one or more elements selected from the group consisting of Mn, Co, Ni, Fe, Al, Ti, and V, or two elements V and O, LiM5VO₄ wherein M5 is one or more elements selected from the group consisting of Fe, Mn, Co, Ni, Al and Ti; Li₂M6P₂O₇ wherein M6 is one or more elements selected from the group consisting of Fe, Mn, Co, Ni, Al, Ti and V, or two elements V and O; LiVP₂O₇, Liₓ₇V_{y7}M7_{z7} wherein 2 ≤ x7 ≤4, 1 ≤ y7 ≤3, 0 ≤ z7 ≤1, 1 ≤ y7+z7 ≤3, and M7 is one or more elements selected from the group consisting of Ti, Ge, Al, Ga and Zr; Li₁₊ₓ₈Alₓ₈M8₂₋ₓ₈(PO₄)₃ wherein 0 ≤ x8 ≤ 0.8, and M8 is one or more elements selected from the group consisting of Ti and Ge; (Li_{3-a9x9+(5-b9)y9}M9ₓ₉)(V_{1-y9}M10_{y9})O₄ wherein M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤0.6, a9 is an average valence of M9, and b9 is an average valence of M10; LiNb₂O₇, Li₄Ti₅O₁₂, Li₄Ti₅PO₁₂, TiO₂, LiSi, and graphite.
[11] The all-solid-state battery according to any one of [8] to [10], wherein the positive electrode and the negative electrode comprise the lithium ion conductive solid electrolyte according to [6] or [7].

### Advantageous Effect of Invention

According to the lithium ion conductive solid electrolyte material according to one embodiment of the present invention, a lithium ion conductive solid electrolyte with a high relative density and excellent reliability can be obtained even in a short sintering time of shorter than 12 hours. The high relative density means that there are a few voids inside of a solid electrolyte layer, the positive electrode active material layer and negative electrode active material layer described later, leading to rendering a high mechanical strength and resistance to damage of an all solid-state battery to be produced. The few voids also lead to a high likelihood of capable of inhibiting lithium included in these layers from precipitating as dendrites and causing short circuits.

According to one embodiment of the present invention, the lithium ion conductive solid electrolyte material can also be produced by a method excellent in its productivity.

Furthermore, using the lithium ion conductive solid electrolyte according to one embodiment of the present invention makes it possible to facilitate manufacturing an all-solid-state battery excellent in economy, including a solid electrolyte having a sufficient ion conductivity while preventing short circuits of positive electrode and negative electrode materials as well as inhibiting decomposition and deterioration of other materials such as the positive electrode and negative electrode materials.

### Brief Description of Drawing

[Figure 1] Figure 1 is XRD patterns of the lithium ion conductive solid electrolyte materials obtained in Example 1 and Comparative Example 1.
[Figure 2] Figure 2 is the fitting results of a diffraction peak having the maximum intensity in a range of 20° ≤2θ ≤ 40° in an XRD pattern of the lithium ion conductive solid electrolyte material obtained in Comparative Example 1.
[Figure 3] Figure 3 is the fitting results of a diffraction peak having the maximum intensity in a range of 20° ≤ 2Θ ≤ 40° in an XRD pattern of the lithium ion conductive solid electrolyte material obtained in Example 1.

### Description of Embodiment

### <<Lithium ion conductive solid electrolyte material>>

The lithium ion conductive solid electrolyte material according to one embodiment of the present invention (hereinafter also referred to as a "present material 1")
has a crystal structure based on LiTa₂PO₈ (hereinafter also referred to as a "LTPO structure"), and
has at least lithium, tantalum, phosphorus, oxygen, and zirconium as constituent elements,
wherein a half-width of a diffraction peak having the maximum intensity observed in a range of 20° ≤ 2Θ ≤ 40° in X-ray diffraction is 0.160° or more, and
the zirconium content is more than 0% by atom and 3.0% by atom or less.

The present material 1 having the LTPO structure can be determined by analyzing an X-ray diffraction (XRD) pattern, specifically, the XRD pattern measured by the method described in Examples below.

In the present material 1 having the aforementioned LTPO structure, a peak similar to that derived from a crystal structure of LiTa₂PO₈ described in J. Kim et al, J. Mater. Chem. A, 2018, 6, p22478-22482, is observed.

In an X-ray diffraction (XRD pattern) of the present material 1, a half-width of the diffraction peak having the maximum intensity observed in the range of 20° ≤ 2Θ ≤ 40° is 0.160° or more, preferably 0.180° or more, more preferably 0.200° or more, and the upper limit of the half-width is not particularly limited, but is for example, 0.500°.

The present material 1 having the half-width allows the lithium ion conductive solid electrolyte (sintered body) obtained by sintering the present material 1 to have a likelihood of achieving a higher ion conductivity.

A shape and a size, for example, of the present material 1 are not particularly limited, but are preferably in the form of a particle (powder form), and an average particle diameter (D50) of the present material 1 is preferably 0.1 to 10 µm. and more preferably 0.1 to 5 µm. In the present invention, an average particle size refers to a 50% particle diameter (D50) in a volume-based cumulative particle size distribution unless otherwise specified.

Within the above range of the average particle size of the present material 1, the lithium ion conductive solid electrolyte (sintered body) obtained by sintering the present material 1 tends to achieve a higher ion conductivity.

Elements constituting the present material 1 are not particularly limited as long as they include lithium, tantalum, phosphorus, oxygen and zirconium, and may include one or more of elements selected from the group consisting of B, Bi, Nb, Ga, Sn, Hf, W, Mo, Si, Al and Ge.

The content of lithium element in the present material 1 is preferably 5.0% by atom or more, more preferably 9.0% by atom or more, preferably 20.0% by atom or less and more preferably 15.0% by atom or less, from the viewpoint of, for example, being able to facilitate obtaining a lithium ion conductive solid electrolyte (sintered body) with a higher lithium ion conductivity.

The content of each element in the present material 1 can be measured, for example, by an absolute intensity quantification method of Auger Electron Spectroscopy (AES) using a standard powder sample including Mn, Co, and Ni at a 1:1:1 ratio as a lithium-containing transition metal oxide such as LiCoO₂. In addition thereto, the content thereof can be determined by a conventionally known quantitative analysis. For example, the content of each element in the present material 1 can be determined using a high frequency inductively coupled plasma-atomic emission spectrometer (ICP-AES) after adding an acid to a sample for thermal decomposition and then adjusting the volume of the thermal decomposition product.

The content of the tantalum element in the present material 1 is preferably 10.6% by atom or more, more preferably 11.0% by atom or more, preferably 16.6% by atom or less, and more preferably 16.0% by atom or less, from the viewpoint of, for example, being able to easily obtain a lithium ion conductive solid electrolyte (sintered body) with a higher lithium ion conductivity.

The content of the phosphorus element in the present material 1 is preferably 5.3% by atom or more, more preferably 5.5% by atom or more, preferably 8.3% by atom or less, and more preferably 8.2% by atom or less, from the viewpoint of, for example, being able to further lower a sintering temperature upon obtaining a lithium ion conductive solid electrolyte (sintered body) with a sufficient ion conductivity.

The content of the zirconium element (zirconium content) in the present material 1 is more than 0% by atom and 3.0% by atom or less, preferably 0.1 to 2.5% by atom, and more preferably 0.1 to 2.0% by atom, from the viewpoint of, for example, being able to easily obtain a lithium ion conductive solid electrolyte (sintered body) with a high relative density and excellent reliability, even though sintered in a short time.

When the present material 1 includes one or more elements selected from the group consisting of B, Bi, Nb, Ga, Sn, Hf, W, Mo, Si, Al, and Ge, each content of one or more elements selected from the group consisting of B, Bi, Nb, Ga, Sn, Hf, W, Mo, Si, Al, and Ge in the present material 1, is preferably 0.1 to 5.0% by atom and more preferably 0.1 to 3.0% by atom, from the viewpoint of, for example, a likelihood to be able to easily obtain a lithium ion conductive solid electrolyte (sintered body) achieving a higher ion conductivity.

The present material 1 preferably includes a boron element from the viewpoint of, for example, being able to lower a sintering temperature when obtaining a lithium ion conductive solid electrolyte (sintered body) with a sufficient ion conductivity and a relative density.

When the present material 1 includes the boron element, for the same reason, the content thereof is preferably 0.1% by atom or more, more preferably 0.5% by atom or more, preferably 5.0% by atom or less, and more preferably 3.0% by atom or less.

### <<Production method of lithium ion conductive solid electrolyte material>>

The method for producing a lithium ion conductive solid electrolyte material according to one embodiment of the present invention (hereinafter also simply referred to as the "method for producing a present material 2") is
a method for producing a lithium ion conductive solid electrolyte material (hereinafter also referred to as "the present material 2"), having a crystal structure based on LiTa₂PO₈ and having at least lithium, tantalum, phosphorus, oxygen, and zirconium as constituent elements, wherein in X-ray diffraction of the lithium ion conductive solid electrolyte material, a half-width of the diffraction peak thereof, derived from a crystal structure based on LiTa₂PO₈ and having the maximum intensity observed in a range of 20° ≤ 2θ ≤ 40°, is 0.160° or more, the method comprising:
a primary pulverization step of pulverizing a raw material substance to obtain a primary pulverized product,
a firing step of firing the primary pulverized product to obtain a primary fired product, and
a secondary pulverization step of pulverizing the primary fired product by using a ball mill to obtain the present material 2,
wherein, in the secondary pulverization step, a zirconia ball with a diameter of larger than 1 mm and smaller than 10 mm is used.

In the X-ray diffraction (XRD pattern) of the present material 2, the half-width of the diffraction peak thereof having the maximum intensity observed in the range of 20° ≤ 2θ ≤ 40°, is 0.160° or more, preferably 0.180° or more, and more preferably 0.200° or more, and the upper limit of the half-width is not particularly limited, and is, for example, 0.500°.

The present material 2 having the above half-width tends to allow the lithium ion conductive solid electrolyte (sintered body) obtained by sintering the present material 2 to have a likelihood to achieve a higher ion conductivity.

Elements constituting the present material 2 are not particularly limited as long as they include lithium, tantalum, phosphorus, oxygen, and zirconium, and may include one or more of elements selected from the group consisting of B, Bi, Nb, Ga, Sn, Hf, W, Mo, Si, Al, and Ge.

For the same reasons as described in the above column of the present material 1, the elements constituting the present material 2 preferably include lithium, tantalum, phosphorus, oxygen, boron and zirconium.

The present material 2 is preferably the present material 1 described above.

A method for confirming a LTPO structure, a shape, and a size, of the present material 2, and the content of each element in the present material 2, are the same as those described in the above column of the present material 1.

### <Primary pulverization step>

The primary pulverization step is a step of pulverizing a raw material substance to obtain a primary pulverized product.

In the primary pulverization step, the resulting primary pulverized product is preferably pulverized so as to be amorphous by a mechanochemical reaction, and is preferably pulverized so that an average particle diameter (D50) of the resulting primary pulverized product falls within the range described above.

Examples of the primary pulverization step include a pulverization method using, for example, a roll tumbling mill, a ball mill, a small diameter ball mill (bead mill), a medium stirring mill, an air flow pulverizer, a mortar, an automatic kneading mortar, a tank crusher, or a jet mill. Among them, the pulverization method using a ball mill or bead mill is preferred, and a pulverization method by a ball mill using a ball having a diameter of 0.1 to 10 mm is more preferred, from the view point of, for example, being able to easily obtain a lithium ion conductive solid electrolyte (sintered body) achieving a higher ion conductivity when obtaining the lithium ion conductive solid electrolyte (sintered body) from the present material 2.

A time of the primary pulverization step is preferably 0.5 to 48 hours and more preferably 2 to 48 hours, from the viewpoint of, for example, being able to easily obtain the present material 2, which becomes amorphous by a mechanochemical reaction and has an average particle diameter (D50) within the range described above.

Upon the primary pulverization step, the step of mixing while pulverization under heating, if necessary, may be carried out, but the step is usually carried out at room temperature.

The primary pulverization step may be carried out under atmosphere, but is preferably carried out under an atmosphere of nitrogen gas and/or argon gas with the adjusted oxygen gas content within the range of 0 to 20% by volume.

The raw material substance used in the primary pulverization step is preferably an inorganic compound from the viewpoint of ease of handling.

The raw material substance may be obtained by producing it using a conventionally known method, or may be a commercial product for use.

As the raw material substance, for example, a compound including a lithium atom, a compound including a tantalum atom, and a compound including a phosphorus atom, are preferably used.

Since the present material 2 has zirconium as a constituent element, as the raw material substance, a compound including a zirconium atom may be used, and a zirconia ball is used in the secondary pulverization step, as a result of which a zirconium element derived from the zirconia ball will be included in the present material 2.

It is preferable for the raw material substance to be free of zirconium.

Examples of the compound including a lithium atom include lithium carbonate (Li₂CO₃), lithium oxide (Li₂O), lithium hydroxide (LiOH), lithium acetate (LiCH₃COO), and hydrates thereof. Among these, lithium carbonate, lithium hydroxide, and lithium acetate are preferable in that these are easily decomposed and reacted.

As the compound including a lithium atom, one may be used, or two or more may be used.

Examples of the compound including a tantalum atom include tantalum pentoxide (Ta₂O₅) and tantalum nitrate (Ta(NO₃)₅). Among these, tantalum pentoxide is preferable from the viewpoint of cost.

As the compound including a tantalum atom, one may be used, or two or more may be used.

As the compound including a phosphorus atom, a phosphate is preferable, and examples of the phosphate include diammonium hydrogen phosphate ((NH₄)₂HPO₄) and monoammonium dihydrogen phosphate (NH₄H₂PO₄) in that these are easily decomposed and reacted.

As the compound including a phosphorus atom, one may be used, or two or more may be used.

The compound including a zirconium atom is preferably an inorganic compound from the viewpoint of ease of handling, and example thereof include an oxide of zirconium and a nitrate of zirconium. Among them, the oxide is preferable from the viewpoint of cost.

Examples of the compound including a zirconium atom include zirconium oxide (ZrO₂) and zirconium hydroxide (Zr(OH)₄).

As the compound including a zirconium atom, one may be used, or two or more may be used.

In the case of the present material including one or more elements M1 selected from the group consisting of Bi, Nb, Ga, Sn, Hf, W, and Mo, and/or one or more elements M2 selected from the group consisting of B, Si, Al, and Ge, as the raw material substance, a compound including a lithium atom, a compound including a tantalum atom, a compound including a phosphorus atom, and further a compound including the element M1 and/or a compound including the element M2, are preferably used.

The compound including the elements M1 is not particularly limited, and an inorganic compound is preferable from the viewpoint of ease of handling, and examples thereof include an oxide and a nitrate of M1. Among them, the oxide is preferable from the viewpoint of cost.

As the compound including the element M1, one may be used, or two or more may be used.

When M1 is Nb, examples of the compound including a niobium atom include Nb₂O₅, LiNbOs, LiNbsOs, and NbPOs.

As the compound including a niobium atom, one may be used, or two or more may be used.

When M1 is Bi, examples of the compound including a bismuth atom include LiBiO₂, Li₃BiO₃, Li₄Bi₂O₅, Li_{2.4}Al_{0.2}BiO₃, and Bi₂O₃.

As the compound including a bismuth atom, one may be used, or two or more may be used.

When M1 is Ga or Sn, examples of the oxide thereof include gallium oxide (Ga₂O₃) and tin oxide (SnO₂), respectively.

When M1 is Hf, W, or Mo, examples of the oxide include, for example, hafnium oxide (HfO₂), tungsten oxide (WO₃), and molybdenum oxide (MoOs), respectively. When M1 is Hf, W, or Mo, in addition to the oxides, hafnium hydroxide (Hf(OH)₄), tungstic acid (H₂WO₄), and molybdic acid (H₂MoO₄) can also be used in terms of facilitation of reaction.

The compound including the elements M2 is not particularly limited, and an inorganic compound is preferable from the viewpoint of ease of handling, and examples thereof include an oxide of M2.

As the compound including the elements M2, one may be used, or two or more may be used.

When M2 is B, examples of the compound including a boron atom include LiBO₂, LiB₃O₅, Li₂B₄O₇, Li₃B₁₁O₁₈, Li₃BO₃, Li₃B₇O₁₂, Li₄B₂O₅, Li₆B₄O₉, Li₃₋ₓ₅B₁₋ₓ₅Cx₅O₃ (0 < x < 1), Li₄₋ₓ₆B₂₋ₓ₆Cₓ₆O₅ (0 < x6 < 2), L_{12.4}Al_{0.2}BO₃, Li_{2.7}Al_{0.1}BO₃, B₂O₃, and H₃BO₃.

As the compound including a boron atom, one may be used, or two or more may be used.

When M2 is Si, examples of the compound including a silicon atom include SiO₂, Li₂SiO₃, Li₂Si₂O₅, Li₂Si₃O₇, Li₄SiO₄, Li₆Si₂O₇, and Li_{g}SiO₆.

As the compound including a silicon atom, one may be used, or two or more may be used.

When M2 is Ge or Al, examples of the oxide thereof include germanium oxide (GeO₂) and aluminum oxide (Al₂O₃), respectively.

A mixing ratio of the raw material substances may be, for example, a ratio in which the raw material substances are mixed in such amounts that the content of each constituent element in the resulting present material 2 is within the range described above.

In the firing step described later, a lithium atom is likely to flow out of the system, and thus the compound including a lithium atom may be excessively used by about 10 to 20%.

In addition, in the firing step described later, in order to suppress the generation of a by-product, the compound including a phosphorus atom may be excessively used by about 1 to 10%.

It is to be noted that, in the primary pulverization step, each raw material substance may be preliminarily mixed before pulverization, but it is preferably mixed while pulverized (pulverization mixing).

As the raw material substance, for example, a compound (a) including lithium, tantalum, phosphorus, and oxygen as constituent elements may be used, and in this case, a compound including a zirconium atom, a compound including the element M1, and/or a compound including the element M2 may be further used.

### • Compound (a)

The compound (a) is a compound including lithium, tantalum, phosphorus, and oxygen as constituent elements, is preferably an oxide including these elements, and is more preferably a lithium ion conductive compound including these elements.

As the compound (a), one may be used, or two or more may be used.

The compound (a) is preferably a compound having a monoclinic structure. Whether the compound (a) has a monoclinic structure can be determined, for example, by Rietveld analysis of an X-ray diffraction (XRD) pattern of the compound (a), specifically by the method of the following Examples.

Specific examples of the compound (a) include a compound (a1) that includes lithium, tantalum, phosphorus, and oxygen as constituent elements and may further include one or more elements M1' selected from the group consisting of Bi, Nb, Zr, Ga, Sn, Hf, W, and Mo; and a compound (a2) that includes lithium, tantalum, phosphorus, and oxygen as constituent elements and may further include one or more elements M2 selected from the group consisting of B, Si, Al, and Ge, for example. Among these, the compound (a) is preferably a compound consisting only of lithium, tantalum, phosphorus, and oxygen as constituent elements, and more preferably LiTa₂PO₈, from the viewpoint of, for example, exerting the advantageous effects of the present invention more.

The compound (a1) is preferably LiTa₂PO₈ or a compound in which Ta in LiTa₂PO₈ is partially substituted with the element(s) M1', and it preferably has a monoclinic structure. It is preferable that the compound (a1) is specifically a compound represented by the compositional formula Li_{[1+(5-a)x]}Ta₂₋ₓM1'ₓPO₈ wherein M1', is one or more elements selected from the group consisting of Bi, Nb, Zr, Ga, Sn, Hf, W and Mo, 0.0 ≤ x < 1.0, and a is an average valence of M1'.

M1' is more preferably Bi, Nb, Zr, W, and Mo, further preferably Bi, Nb, Zr, and W, and particularly preferably Bi, Nb, and Zr, from the viewpoint of, for example, a higher lithium ion conductivity at a grain boundary in the resulting lithium ion conductive solid electrolyte (sintered body).

The x is preferably 0.95 or less, more preferably 0.90 or less, further preferably 0.85 or less, more preferably 0.80 or less, and particularly preferably 0.75 or less.

When x is within the above range, in the resulting lithium ion conductive solid electrolyte (sintered body), the lithium ion conductivity at a grain boundary tends to be higher.

The valence and content of M1' allow the amount of Li to vary depending on an average valence of M1' so that charge neutrality of the compound (a) described above can be obtained. The average valence represented by the a can be determined as follows. When M1' is composed of two or more elements, the a is calculated by weighted averaging using a valence of each element and the content of each element. For example, when M1' is composed of 80% by atom Nb and 20% by atom Zr, the a is calculated as (+5 × 0.8) + (+4 × 0.2) = +4.8. When M1' is composed of 80% by atom Nb and 20% by atom W, the a is calculated as (+5 × 0.8) + (+6 × 0.2) = +5.2.

The compound (a2) is preferably LiTa₂PO₈ or a compound in which P in LiTa₂PO₈ is partially substituted with the element(s) M2, and it preferably has a monoclinic structure.

It is preferable that the compound (a2) is specifically a compound represented by the compositional formula Li_{[1+(5-b)y]}Ta₂P_{1-y}M2_{y}O₈ wherein M2 is one or more elements selected from the group consisting of B, Si, Al and Ge, 0.0 ≤ y < 0.7 and b is an average valence of M2.

M2 is more preferably B, Si, and Al and further preferably B and Si, from the viewpoint of, for example, a higher lithium ion conductivity at a grain boundary in the resulting lithium ion conductive solid electrolyte (sintered body).

The y is preferably 0.65 or less, more preferably 0.60 or less, and further preferably 0.55 or less.

When y is within the above range, the total ion conductivity, which is the sum of lithium ion conductivities inside crystal grains and at the grain boundaries, tends to be higher in the resulting lithium ion conductive solid electrolyte (sintered body).

The average valence represented by the b can be determined in the same manner as in the method for calculating the average valence a described above.

The method for producing the compound (a) is not particularly limited, and for example, a conventionally known production method such as a solid phase reaction or a liquid phase reaction can be adopted. Specific examples of the method for producing the compound (a) include a method including at least a mixing step and a firing step each in one stage.

Examples of the mixing step in the method for producing the compound (a) include, for example, a step of mixing raw materials such as a compound including a lithium atom (for example, an oxide, a carbonate), a compound including a tantalum atom (for examples, an oxide, a nitrate), a compound including a phosphorus atom (for example, an ammonium salt), and, if necessary, a compound including the element M1' (for example, an oxide), and/or a compound including the element M2 (for example, an oxide).

As each of the raw materials, one may be used, or two or more may be used.

Examples of the method for mixing the raw materials include a mixing method using, for example, a roll tumbling mill, a ball mill, a small diameter ball mill (bead mill), a medium stirring mill, an air flow pulverizer, a mortar, an automatic kneading mortar, a tank crusher, or a jet mill.

A mixing ratio of the raw materials may be, for example, a ratio in which the raw materials are mixed in a stoichiometric ratio so as to achieve a desired composition of compound (a).

It is to be noted that, in a firing step in the method for producing the compound (a) described later, a lithium atom tends to flow out of the system, and therefore a compound including a lithium atom may be excessively used by 10 to 20%. In the firing step in the method for producing the compound (a) described later, a compound including a phosphorus atom may be excessively used by about 1 to 10% in order to inhibit the generation of by-product.

Upon mixing the raw materials, they may be mixed while heated, if necessary, however, they are usually mixed at room temperature.

The mixing of the raw materials may also be carried out under atmosphere, but is preferably carried out under an atmosphere of nitrogen gas and/or argon gas with the adjusted oxygen gas content within the range of 0 to 20% by volume.

In the firing step in the method for producing the compound (a), the mixture obtained in the mixing step is fired. When the firing step is carried out a plurality of times, a pulverization step using, for example, a ball mill, or a mortar may be provided for the purpose of pulverizing or reducing the particle size of the fired product obtained in the firing step. In particular, the compound (a) has a low reaction rate of phase formation, and thus a reaction intermediate may be present in the first firing. In this case, it is preferable to carry out the first firing, carry out the pulverization step, and then further carry out the firing step.

The firing step in the method of producing the compound (a) may be carried out under atmosphere, but is preferably carried out under an atmosphere of nitrogen gas and/or argon gas, with the oxygen gas content adjusted in the range of 0 to 20% by volume.

A firing temperature in the firing step in the method for producing the compound (a) also depends on a firing time, and is preferably 800°C or higher, more preferably 950°C or higher, preferably 1,200°C or lower, more preferably 1,100°C or lower, and further preferably 1,000°C or lower.

When the firing temperature is in the above range, a lithium atom is less likely to flow out of the system, and the compound (a) having a high ion conductivity tends to be easily obtained.

A firing time (the total firing time in the case of carrying out the firing step several times) in the firing step in the method for producing the compound (a), also depends on the firing temperature, and is preferably 1 hour or longer, more preferably 3 hours or longer, preferably 16 hours or shorter and more preferably 12 hours or shorter.

When the firing time is in the above range, a lithium atom is less likely to flow out of the system, and a compound having a high ion conductivity tends to be easily obtained.

The fired product obtained after the firing step in the method for producing the compound (a) may absorb moisture or react with carbon dioxide followed by deterioration of the product when allowed to stand in the atmosphere. Because of this, the fired product obtained after the firing step is preferably transferred into a dehumidified inert gas atmosphere and stored when the temperature thereof drops to 200°C or less in temperature lowering after the firing step.

### <Firing step>

The firing step in the method for producing the present material 2 is a step of firing the primary pulverized product to obtain a primary fired product.

A firing temperature in the firing step also depends on a firing time, and is preferably 800°C or higher, more preferably 950°C or higher, preferably 1,200°C or lower, more preferably 1,100°C or lower, and further preferably 1,000°C or lower. When the firing temperature is within this range, a lithium atom is less likely to flow out of the system, resulting in a likelihood to facilitate obtaining a lithium ion conductive solid electrolyte (sintered body) with a high ion conductivity.

A firing time in the firing step (the total firing time in the case of carrying out the firing step several times) also depends on the firing temperature, and is preferably 1 hour or longer, more preferably 3 hours or longer, preferably 16 hours or shorter and more preferably 12 hours or shorter.

### <Secondary pulverization step>

The secondary pulverization step is a step of pulverizing the primary fired product by a ball mill using a zirconia ball with a diameter of larger than 1 mm and smaller than 10 mm to obtain the present material 2.

The diameter of the zirconia ball is preferably 1.5 mm or larger, more preferably 2.0 mm or larger, preferably 9.0 mm or smaller and, more preferably 8.0 mm or smaller.

Using the zirconia ball, the diameter of which is in the above range enables obtaining a lithium ion conductive solid electrolyte (sintered body) with a high relative density and excellent reliability even in a short sintering time, thereby making it possible to produce the lithium ion conductive solid electrolyte (sintered body) by a method excellent in its productivity.

A time of the secondary pulverization step is preferably 0.1 to 48 hours and more preferably 0.5 to 48 hours, from the viewpoint of, for example, being able to easily obtain the present material 2 with the half-width and average particle diameter (D50) within the aforementioned ranges.

Upon the secondary pulverization step, the step of mixing while pulverization may be carried out while heating, if necessary, however, the step is usually carried out at room temperature.

The secondary pulverization step may be carried out under atmosphere, but is preferably carried out under an atmosphere of nitrogen gas and/or argon gas with the adjusted oxygen gas content in the range of 0 to 20% by volume.

### <<Lithium ion conductive solid electrolyte (sintered body)>>

The lithium ion conductive solid electrolyte (sintered body) according to one embodiment of the present invention (hereinafter also referred to as the "present electrolyte 1") is
a lithium ion conductive solid electrolyte having a crystal structure based on LiTa₂PO₈
and having at least lithium, tantalum, phosphorus, oxygen, and zirconium as constituent elements,
wherein a relative density that is a percentage of a ratio of the measured density calculated from the mass and volume of the lithium ion conductive solid electrolyte to a theoretical density of the lithium ion conductive solid electrolyte is 75.0% or more.

The present electrolyte 1 is preferably the electrolyte obtained by using the present material 1 or 2, and is more preferably the sintered body obtained by sintering the present material 1 or 2.

The present electrolyte 1 has a LTPO structure.

A crystal rate of the LTPO structure of the present electrolyte 1 (= crystalline amount of LTPO × 100/total crystalline amount of all identified crystals) is preferably 60% or more, more preferably 70% or more, further preferably 80% or more, and the upper limit is not particularly limited, but is less than 100%.

When the crystal rate of the LTPO structure of the present electrolyte 1 is within the above range, the ion conductivities tend to be high both within a crystal grain and at a grain boundary, resulting in a lithium ion conductive solid electrolyte (sintered body) with the high total ion conductivity and a lithium ion conductive solid electrolyte (sintered body) tends to have a high relative density.

The crystal rate of the LTPO structure in the present electrolyte 1 can be calculated, for example, by carrying out Rietveld analysis of the XRD pattern of the present electrolyte 1 using the known analysis software RIETAN-FP (available on creator; Fujio Izumi's website "RIETAN-FP/VENUS system distribution file" (http://fujioizumi.verse.jp/download/download.html)).

The relative density of the present electrolyte 1 is 75.0% or more, preferably 80% or more, and particularly preferably 85% or more, and the upper limit is not particularly limited, but is 100%, and it may be for example, 99%.

The present electrolyte 1 with the relative density in the above range has an excellent balance between the total ion conductivity and reliability.

The relative density is a percentage of the measured density calculated from the mass and volume of the present electrolyte 1, divided by a theoretical density of the present electrolyte 1 (measured density/theoretical density × 100), and can be measured specifically by the method described in Examples below.

The theoretical density of the present electrolyte 1 is specifically calculated by weighted averaging using a theoretical density of a crystal structure constituting the present electrolyte 1 and the content of the crystal structure. For example, when the present electrolyte 1 has a crystal structure 1 with a content of h% and a crystal structure 2 with a content of k%, the theoretical density of the electrolyte can be calculated by (theoretical density of crystal structure 1 × h + theoretical density of crystal structure 2 × k)/100.

For example, when crystal structures based on LiTasOs, Ta₂O₅, and TaPOs, for example, are identified, a theoretical density thereof each can be calculated by weighted averaging a theoretical density of each of these crystal structures and a theoretical density of the LTPO structure, by using the content of each crystal structure determined by Rietveld analysis.

The content of each crystal structure can be determined by Rietveld analysis.

Constituent elements of the present electrolyte 1 are not particularly limited as long as they include lithium, tantalum, phosphorus, oxygen, and zirconium, but it is preferable to include a boron element from the viewpoint of, for example, being able to further lower a sintering temperature when obtaining a lithium ion conductive solid electrolyte (sintered body) with a sufficient ion conductivity and a relative density, and one or more elements Ma selected from the group consisting of Nb, Ga, Sn, Hf, Bi, W, Mo, Si, Al, and Ge may be included.

The content of lithium element in the present electrolyte 1 is preferably 5.0% by atom or more, more preferably 9.0% by atom or more, preferably 20.0% by atom or less and more preferably 15.0% by atom or less, from the viewpoint of, for example, resulting in providing a lithium ion conductive solid electrolyte (sintered body) with a higher lithium ion conductivity.

The content of each element in the present electrolyte 1 can be measured in the same manner as the content of each element in the present material 1 described above.

The content of tantalum element in the present electrolyte 1 is preferably 10.6% by atom or more, more preferably 11.0% by atom or more, preferably 16.6% by atom or less and more preferably 16.0% by atom or less, from the viewpoint of, for example, resulting in providing a lithium ion conductive solid electrolyte (sintered body) with a higher lithium ion conductivity.

The content of phosphorus element in the present electrolyte 1 is preferably 5.3% by atom or more, more preferably 5.8% by atom or more, preferably 8.3% by atom or less, more preferably less than 8.3% by atom, and further preferably 8.0% by atom or less, from the viewpoint of, for example, resulting in providing a lithium ion conductive solid electrolyte (sintered body) with a higher lithium ion conductivity.

The content of zirconium element (zirconium content) in the present electrolyte 1 is greater than 0% by atom to 3.0% by atom or less, preferably 0.1 to 2.5% by atom, and more preferably 0.1 to 2.0% by atom, from the viewpoint of, for example, resulting in providing a lithium ion conductive solid electrolyte (sintered body) with a high relative density and excellent reliability even in a short sintering time.

When the present electrolyte 1 includes a boron element, the content of boron element in the present electrolyte 1 is preferably 0.1% by atom or more, more preferably 0.5% by atom or more, preferably 5.0% by atom or less, and more preferably 3.0% by atom or less, from the viewpoint of, for example, being able to further lower a sintering temperature when obtaining a lithium ion conductive solid electrolyte (sintered body) with a sufficient ion conductivity and a relative density.

When the present electrolyte 1 includes the element Ma, each content of the element Ma in the present electrolyte 1 is preferably 0.1 to 5.0% by atom and more preferably 0.1 to 3.0% by atom, from the viewpoint of, for example, a likelihood to be able to further lower a sintering temperature when obtaining a lithium ion conductive solid electrolyte (sintered body) with a sufficient ion conductivity and a relative density.

The total ion conductivity of the present electrolyte 1 is preferably 2.00 × 10⁻⁴ S· cm⁻¹ or higher and more preferably 3.00 × 10⁻⁴ S· cm⁻¹ or higher.

The present electrolyte 1 with the total ion conductivity within the above range has a sufficient ion conductivity, which is preferred.

The total ion conductivity can be specifically measured by the following method.

A gold layer is formed on both sides of the present electrolyte 1 (sintered body) using a sputtering machine to obtain a measurement pellet for evaluating an ion conductivity, and the obtained measurement pellet is held in a thermostatic bath at 25°C for 2 hours before measurement. Subsequently, at 25°C, AC impedance measurements in a frequency range of 1 Hz to 10 MHz are carried out by using an impedance analyzer (model number: 1260A, manufactured by Solartron Analytical) under the condition of an amplitude of 25 mV. The obtained impedance spectrum is fitted with an equivalent circuit by using equivalent circuit analysis software ZView attached to the apparatus to obtain respective lithium ion conductivities within a crystal grain and at a grain boundary, which are then summed up to calculate the total conductivity.

### <<Production method of lithium ion conductive solid electrolyte>>

The method for producing a lithium ion conductive solid electrolyte according to one embodiment of the present invention (hereinafter also referred to as the "method for producing the present electrolyte 2") has
a sintering step of sintering the present material 2 obtained by the method for producing the present material 2 to obtain a lithium ion conductive solid electrolyte (hereinafter also referred to as the "present electrolyte 2"),
wherein a relative density that is a percentage of a ratio of the measured density calculated from the mass and volume of the present electrolyte 2 to a theoretical density of the present electrolyte 2 is 75.0% or more.

The present electrolyte 2 is preferably the present electrolyte 1 described above.

The present electrolyte 2 preferably has a LTPO structure as the present electrolyte 1. The relative density, kinds and the content of the constituent elements, and the total ion conductivity, of the present electrolyte 2 are the same as those described in the column of the electrolyte 1 above.

### <Sintering step>

The sintering step is a step of sintering the present material 2 to obtain a present electrolyte 2.

A sintering temperature in the sintering step is preferably 500°C or higher, more preferably 600°C or higher, further preferably 700°C or higher, preferably 1,200°C or lower, more preferably 1,000°C or lower, and further preferably 900°C or lower.

Use of the present material 2 enables obtaining a sintered body with a sufficient ion conductivity even when sintered at such a low temperature.

A sintering time in the sintering step also depends on the sintering temperature, but is preferably 0.5 hours or longer, more preferably 1 hour or longer, preferably shorter than 12 hours, and more preferably 10 hours or shorter.

Use of the present material 2 enables obtaining a lithium ion conductive solid electrolyte (sintered body) with a high relative density and excellent reliability even when sintered in such a short time. A desired lithium ion conductive solid electrolyte (sintered body) can be obtained even when sintered in such a short time, as a result of which a lithium ion conductive solid electrolyte (sintered body) can be produced by a method excellent in productivity and economy.

The sintering may be carried out under atmosphere, but is preferably carried out under an atmosphere of a nitrogen gas and/or an argon gas with the oxygen gas content adjusted in the range of 0 to 20% by volume.

The sintering may also be carried out under a reducing gas atmosphere such as nitrogen-hydrogen mixed gas including reducing gas such as hydrogen gas. The ratio of hydrogen gas included in the nitrogen-hydrogen mixed gas is, for example, 1 to 10% by volume. As the reducing gas other than hydrogen gas, for example, ammonia gas, or carbon monoxide gas may be used.

In the sintering step, a molded body molded of the present material 2 is preferably sintered, and a molded body press-molded of the present material 2 is more preferably sintered, from the viewpoint of, for example, being able to easily obtain a lithium ion conductive solid electrolyte (sintered body) with a higher ion conductivity.

Pressure upon press-molding the present material 2, is not particularly limited, but is preferably 50 MPa or higher, more preferably 100 MPa or higher, preferably 500 MPa or lower, and more preferably 400 MPa or lower.

A shape of the molded body press-molded of the present material 2 is also not particularly limited, but is preferably a shape such as a pellet, a coin, or a film, depending on applications of the lithium ion conductive solid electrolyte (sintered body) obtained by sintering the molded body.

Upon production of the present electrolyte 2, other components other than the present material 2 may be used. Examples of the other components include a conventionally known material used for a solid electrolyte of an all-solid-state battery, and examples of a lithium ion conductive compound include a lithium ion conductive material having a structure such as NASICON type one or LISICON type one.

As each of the other components, one may be used, or two or more may be used.

The amount of the other components used is preferably 50% by mass or less and more preferably 30% by mass or less, relative to 100% by mass of the total of the other components and the present material 2, and it is preferable not to use the other components.

### <<All-solid-state battery>>

The all-solid-state battery according to one embodiment of the present invention (hereinafter also referred to as a "present battery") includes a positive electrode having a positive electrode active material, a negative electrode having a negative electrode active material, and a solid electrolyte layer between the positive electrode and the negative electrode, wherein the solid electrolyte layer includes the present electrolyte 1 or 2.

The present battery may be a primary battery or a secondary battery, and is preferably a secondary battery and more preferably a lithium ion secondary battery, from the viewpoint of, for example, exerting the advantageous effects of the present invention more.

The structure of the present battery is not particularly limited as long as the present battery include a positive electrode, a negative electrode, and a solid electrolyte layer between the positive electrode and the negative electrode, and may be a so-called thin film type, laminated type, or bulk type.

### <Solid electrolyte layer>

The solid electrolyte layer is not particularly limited as long as it includes the present electrolyte 1 or 2, and it may include an additive conventionally known to be used in solid electrolyte layers of all-solid-state batteries, if necessary, but it preferably consists only of the present electrolyte 1 or 2.

A thickness of the solid electrolyte layer may be appropriately selected according to a structure of a desired battery to be formed (thin-film type, for example), and is preferably 50 nm or thicker and more preferably 100 nm or thicker, preferably 1,000 µm or thinner and more preferably 100 µm or thinner.

### <Positive electrode>

The positive electrode is not particularly limited as long as the positive electrode has a positive electrode active material, and preferable examples thereof include a positive electrode having a positive electrode current collector and a positive electrode active material layer.

### [Positive electrode active material layer]

The positive electrode active material layer is not particularly limited as long as the positive electrode active material layer includes a positive electrode active material, and the positive electrode active material layer preferably includes a positive electrode active material and a solid electrolyte and may further include an additive such as an electrically conductive aid or a sintering aid.

A thickness of the positive electrode active material layer may be appropriately selected according to a structure of a desired battery to be formed (thin-film type, for example), and is preferably 10 µm or thicker, more preferably 30 µm or thicker, further preferably 50 µm or thicker, preferably 200 µm or thinner, more preferably 150 µm or thinner, and further preferably 100 µm or thinner.

### • Positive electrode active material

Examples of the positive electrode active material include LiCo oxide, LiNiCo oxide, LiNiCoMn oxide, LiNiMn oxide, LiMn oxide, LiMn spinel, LiMnNi oxide, LiMnAl oxide, LiMnMg oxide, LiMnCo oxide, LiMnFe oxide, LiMnZn oxide, LiCrNiMn oxide, LiCrMn oxide, lithium titanate, metal lithium phosphate, a transition metal oxide, titanium sulfide, graphite, hard carbon, a transition metal-including lithium nitride, silicon oxide, lithium silicate, lithium metal, a lithium alloy, a Li-including solid solution, and a lithium-storing intermetallic compound.

Among these, LiNiCoMn oxide, LiNiCo oxide, and LiCo oxide are preferable, and LiNiCoMn oxide is more preferable, from the viewpoint of, for example, having a good affinity with a solid electrolyte, having an excellent balance of macroscopic electrical conductivity, microscopic electrical conductivity, and ion conductivity, having a high average potential, and being able to increase the energy density or battery capacity in the balance between specific capacity and stability.

In addition, the surface of the positive electrode active material may be coated with, for example, an ion conductive oxide such as lithium niobate, lithium phosphate, or lithium borate.

As the positive electrode active material used for the positive electrode active material layer, one may be used or two or more may be used.

Suitable examples of the positive electrode active material also include LiM3PO₄ wherein M3 is one or more elements selected from the group consisting of Mn, Co, Ni, Fe, Al, Ti and V, or two elements V and O; LiM5VO₄ wherein M5 is one or more elements selected from the group consisting of Fe, Mn, Co, Ni, Al and Ti; Li₂M6P₂O₇ wherein M6 is one or more elements selected from the group consisting of Fe, Mn, Co, Ni, Al, Ti and V, or two elements V and O; LiVP₂O₇; Liₓ₇V_{y7}M7_{z7} wherein 2 ≤ x7 ≤4, 1 ≤ y7 ≤3, 0 ≤ z7 ≤1, 1 ≤ y7+z7 ≤3, M7 is one or more elements selected from the group consisting of Ti, Ge, Al, Ga and Zr; Li₁₊ₓ₈Alₓ₈M8₂₋ₓ₈(PO₄)₃ wherein 0 ≤ x8 ≤ 0.8, M8 is one or more elements selected from the group consisting of Ti and Ge; LiNi_{1/3}Co_{1/3}Mn_{1/3}O₂; LiCoO₂; LiNiO₂; LiMn₂O₄; Li₂CoP₂O₇; Li₃V₂(PO₄)₃; Li₃Fe₂(PO₄)₃; LiNi_{0.5}Mn_{1.5}O₄; and Li₄Ti₅O₁₂.

The positive electrode active material is preferably in the form of a particle. The 50% diameter in its volume-based particle size distribution is preferably 0.1 µm or larger, more preferably 0.3 µm or larger, further preferably 0.4 µm or larger, particularly preferably 0.5 µm or larger, preferably 30 µm or smaller, more preferably 20 µm or smaller, further preferably 10 µm or smaller, and particularly preferably 3 µm or smaller.

In addition, the ratio of the length of the major axis to the length of the minor axis (length of the major axis/length of the minor axis), that is, the aspect ratio, of the positive electrode active material is preferably less than 3 and more preferably less than 2.

The positive electrode active material may form a secondary particle. In that case, the 50% diameter in a number-based particle size distribution of the primary particles is preferably 0.1 µm or larger, more preferably 0.3 µm or larger, further preferably 0.4 µm or larger, particularly preferably 0.5 µm or larger, preferably 20 µm or smaller, more preferably 15 µm or smaller, further preferably 10 µm or smaller, and particularly preferably 2 µm or smaller.

The content of positive electrode active material in the positive electrode active material layer is preferably 20% by mass or more, more preferably 30% by mass or more, preferably 80% by mass or less and more preferably 70% by mass or less.

When the content of the positive electrode active material is in the above range, the positive electrode active material functions favorably, and a battery having a high energy density tends to be able to be easily obtained.

### • Solid electrolyte

The solid electrolyte that can be used for the positive electrode active material layer is not particularly limited, and a conventionally known solid electrolyte can be used, however, the present electrolytes 1 or 2 is preferably used from the viewpoint of, for example, further exhibiting effects of the present invention.

As the solid electrolyte used for the positive electrode active material layer, one may be used or two or more may be used.

### • Additives

Suitable examples of the electrically conductive aid include a metal material such as Ag, Au, Pd, Pt, Cu, or Sn, and a carbon material such as acetylene black, ketjen black, a carbon nanotube, or a carbon nanofiber.

As the sintering aid, a compound including a boron atom, a compound including a niobium atom, a compound including a bismuth atom, and a compound including a silicon atom, are preferred.

As each additive used for the positive electrode active material layer, one may be used or two or more may be used.

### • Positive electrode current collector

The positive electrode current collector is not particularly limited as long as the material thereof is one that conducts an electron without causing an electrochemical reaction. Examples of the material of the positive electrode current collector include a simple substance of a metal such as copper, aluminum, or iron, an alloy including any of these metals, and an electrically conductive metal oxide such as antimony-doped tin oxide (ATO) or tin-doped indium oxide (ITO).

As the positive electrode current collector, a current collector obtained by providing an electrically conductive adhesive layer on the surface of an electric conductor can also be used. Examples of the electrically conductive adhesive layer include a layer including, for example, a granular electrically conductive material, or a fibrous electrically conductive material.

### <Negative electrode>

The negative electrode is not particularly limited as long as the negative electrode has a negative electrode active material, and preferable examples thereof include a negative electrode having a negative electrode current collector and a negative electrode active material layer.

### [Negative electrode active material layer]

The negative electrode active material layer is not particularly limited as long as the negative electrode active material layer includes a negative electrode active material, and the negative electrode active material layer preferably includes a negative electrode active material and a solid electrolyte and may further include an additive such as an electrically conductive aid or a sintering aid.

A thickness of the negative electrode active material layer may be appropriately selected according to a structure of a desired battery to be formed (thin-film type, for example), and is preferably 10 µm or thicker, more preferably 30 µm or thicker, further preferably 50 µm or thicker, preferably 200 µm or thinner, more preferably 150 µm or thinner, and further preferably 100 µm or thinner.

### • Negative electrode active material

Examples of the negative electrode active material include a lithium alloy, a metal oxide, graphite, hard carbon, soft carbon, silicon, a silicon alloy, silicon oxide SiOₙ (0 < n ≤ 2), a silicon/carbon composite material, a composite material including silicon in pores of porous carbon, lithium titanate, and graphite covered with lithium titanate.

Among these, a silicon/carbon composite material and a composite material including a silicon domain in a pore of porous carbon are preferable because these have a high specific capacity and can increase the energy density and the battery capacity. A composite material including a silicon domain in a pore of porous carbon is more preferable, has excellent alleviation of volume expansion associated with lithium storage/release by silicon, and can maintain the balance of macroscopic electrical conductivity, microscopic electrical conductivity, and ion conductivity well. A composite material including a silicon domain in a pore of porous carbon in which the silicon domain is amorphous, the size of the silicon domain is 10 nm or less, and the pore derived from the porous carbon is present in the vicinity of the silicon domain is particularly preferable.

Suitable examples of the negative electrode active materials also include LiM3PO₄ wherein M3 is one or more elements selected from the group consisting of Mn, Co, Ni, Fe, Al, Ti and V, or two elements V and O; LiM5VO₄ wherein M5 is one or more elements selected from the group consisting of Fe, Mn, Co, Ni, Al and Ti; Li₂M6P₂O₇ wherein M6 is one or more elements selected from the group consisting of Fe, Mn, Co, Ni, Al, Ti and V, or two elements V and O; LiVP₂O₇; Liₓ₇V_{y7}M7_{z7} wherein 2 ≤ x7 ≤4, 1 ≤ y7 ≤3, 0 ≤z7 ≤1, 1≤ y7+z7 ≤3, M7 is one or more elements selected from the group consisting of Ti, Ge, Al, Ga and Zr; Li₁₊ₓ₈Alₓ₈M8₂₋ₓ₈(PO₄)₃ wherein 0 ≤ x8 ≤0.8, M8 is one or more elements selected from the group consisting of Ti and Ge; (Li_{3-a9x9+(5-b9)y9}M9ₓ₉)(V_{1-y9}M10_{y9})O₄ wherein M9 is one or more elements selected from the group consisting of Mg, Al, Ga and Zn, and M10 is one or more elements selected from the group consisting of Zn, Al, Ga, Si, Ge, P and Ti, 0 ≤ x9 ≤1.0, 0 ≤ y9 ≤0.6, a9 is an average valence of M9, and b9 is an average valence of M10; LiNb₂O₇; Li₄Ti₅O₁₂; Li₄Ti₅PO₁₂; TiO₂; LiSi; and graphite.

The negative electrode active material is preferably in the form of a particle. The 50% diameter in the volume-based particle size distribution thereof, the aspect ratio, and the 50% diameter in the number-based particle size distribution of a primary particle when the negative electrode active material forms a secondary particle are preferably in the same ranges as for the positive electrode active material.

The content of the negative electrode active material in the negative electrode active material layer is preferably 20% by mass or more, more preferably 30% by mass or more, preferably 80% by mass or less and more preferably 70% by mass or less.

When the content of the negative electrode active material is in the above range, the negative electrode active material functions favorably, and a battery having a high energy density tends to be able to be easily obtained.

### • Solid electrolyte

The solid electrolyte that can be used for the negative electrode active material layer is not particularly limited, and a conventionally known solid electrolyte can be used, but the present electrolyte 1 or 2 is preferably used from the viewpoint of, for example, further exhibiting the effects of the present invention.

As the solid electrolyte used for the negative electrode active material layer, one may be used or two or more may be used.

### • Additive

Suitable examples of the electrically conductive aid include metallic materials such as Ag, Au, Pd, Pt, Cu, and Sn, and carbon materials such as acetylene black, Ketjen black, carbon nanotubes, and carbon nanofibers.

As the sintering aid, a compound including a boron atom, a compound including a niobium atom, a compound including a bismuth atom, and a compound including a silicon atom, are preferred.

As each additive used for the negative electrode active material layer, one may be used or two or more may be used.

### • Negative electrode current collector

As the negative electrode current collector, the same current collector as for the positive electrode current collector can be used.

### <Method for producing all-solid-state battery>

The all-solid-state battery can be formed, for example, by a known powder molding method. For example, the positive electrode current collector, a powder for the positive electrode active material layer, a powder for the solid electrolyte layer, a powder for the negative electrode active material layer, and the negative electrode current collector are stacked in this order, these are powder molded at the same time, and thereby formation of each layer of the positive electrode active material layer, the solid electrolyte layer, and the negative electrode active material layer, and connection between any adjacent two of the positive electrode current collector, the positive electrode active material layer, the solid electrolyte layer, the negative electrode active material layer, and the negative electrode current collector can be carried out at the same time.

Upon this powder molding, it is preferable to carry out sintering at the same temperature as the sintering temperature in the sintering step while applying a pressure comparable to the pressure when press molding the present material in the sintering step.

According to one embodiment of the present invention, although a sintering temperature upon manufacturing this all-solid-state battery, which is a low temperature, is applied in a short time, an all-solid-state battery achieving a sufficient ion conductivity can be obtained, which thereby enables manufacturing an all-solid-state battery with excellent economy by using reduced equipment, while decomposition and deterioration, for example, of other materials such as positive electrode and negative electrode materials, are suppressed.

Each layer of the positive electrode active material layer, solid electrolyte layer, and negative electrode active material layer may be powder molded as described above, and when manufacturing an all-solid-state battery using each of the layers obtained, each layer is preferably pressed followed by sintered.

In addition, the all-solid-state battery can also be manufactured, for example, by the following method.

For example a solvent, and/or a resin are(is) appropriately mixed into a material for positive electrode active material layer formation, a material for solid electrolyte layer formation, and a material for negative electrode active material layer formation to prepare pastes for formation of the layers, respectively, and the pastes are applied onto base sheets, respectively, and dried to manufacture a green sheet for the positive electrode active material layer, a green sheet for the solid electrolyte layer, and a green sheet for the negative electrode active material layer. Next, the green sheet for the positive electrode active material layer, the green sheet for the solid electrolyte layer, and the green sheet for the negative electrode active material layer from each of which the base sheet is peeled off are sequentially laminated, thermocompression bonded at a predetermined pressure, and then enclosed in a container and pressurized by, for example, hot isostatic pressing, cold isostatic pressing, or isostatic pressing to manufacture a laminated structure.

Thereafter, this laminated structure undergoes degreasing treatment at a predetermined temperature, if necessary, and a sintering treatment is then carried out to manufacture a laminated sintered body.

A sintering temperature in this sintering treatment is preferably the same as the sintering temperature in the sintering step described above.

Next, if necessary, an all-solid-state battery can also be manufactured by forming a positive electrode current collector and a negative electrode current collector on both principal surfaces of the laminated sintered body by, for example, a sputtering method, a vacuum vapor deposition method, or application or dipping of a metal paste.

### Examples

One embodiment of the present invention will be specifically described below based on Examples. The present invention is not limited to these Examples.

### [Comparative Example 1]

### • Primary pulverization step

Lithium carbonate (Li₂CO₃) (purity 99.0% or higher, manufactured by Sigma-Aldrich, Merck), tantalum pentoxide (Ta₂O₅) (purity 99.9%, manufactured by FUJIFILM Wako Pure Chemicals Corporation), boric acid (H₃BO₃) (purity 99.5% or higher, manufactured by FUJIFILM Wako Pure Chemicals Corporation), and diammonium hydrogenphosphate ((NH₄)₂HPO₄) (purity 98% or higher, manufactured by Sigma-Aldrich, Merck) were weighed so that the ratio of the numbers of atoms of lithium, tantalum, boron, and phosphorus (Li:Ta:B:P) in the resulting lithium ion conductive solid electrolyte was 1.15:1.90:0.10:0.95. Furthermore, considering a lithium atom flowing out of the system in the firing step, lithium carbonate was weighed so that the amount thereof was 1.05 times the amount of lithium atoms in the resulting lithium ion conductive solid electrolyte, and further, in order to inhibit the generation of by-product in the firing step, diammonium hydrogenphosphate was weighed so that the amount thereof was 1.06 times the amount of phosphorus atoms in the resulting lithium ion conductive solid electrolyte. At this time, the remaining elements to be weighed were weighed, assuming that they would not flow out of the system at temperature of firing.

To each weighed raw powder was added an appropriate amount of toluene, and the mixture was subjected to pulverization mixing for 2 hours in a zirconia ball mill using a zirconia ball (1 mm in diameter, manufactured by Nikkato Corporation) to obtain a primary pulverized product.

### • Firing step

The resulting primary pulverized product was placed in an alumina boat and raised to a temperature of 1,000°C under an atmosphere of air (flow rate: 100 mL/min) at a rate of temperature rise of 10°C/min using a rotary kiln (manufactured by MOTOYAMA CO., LTD.), and fired at this temperature for 4 hours to obtain a primary fired product.

### • Secondary pulverization step

To the primary fired product obtained was added the appropriate amount of toluene, and the mixture was subjected to pulverization mixing (350 rpm) for 30 minutes using a zirconia ball mill with a zirconia ball (1 mm diameter, manufactured by Nikkato Corporation) to obtain the secondary pulverized product (lithium ion conductive solid electrolyte material).

By using a tablet forming machine and applying pressure of 40 MPa to the secondary pulverized product obtained using a hydraulic press, a disk-shaped molded body of 10 mm in diameter and 1 mm in thickness was formed and then by applying pressure of 300 MPa to the disk-shaped molded body by CIP (cold isostatic pressing), a pellet was manufactured.

### • Sintering step

The resulting pellet was placed in an alumina boat and raised to a temperature of 900°C under an atmosphere of air (flow rate: 100 mL/min) at a rate of temperature rise of 10°C/min using a rotary kiln (manufactured by MOTOYAMA CO., LTD.), and sintered at this temperature for 2 hours to obtain a sintered product.

The resulting sintered body was cooled to room temperature and then removed from the rotary kiln and stored under a dehumidified nitrogen gas atmosphere to obtain a lithium ion conductive solid electrolyte.

The ratio of the numbers of atoms of lithium, tantalum, boron, phosphorus, and oxygen (Li:Ta:B:P:O) in the resulting lithium ion conductive solid electrolyte was
1.15:1.90:0.10:0.95:8.0.

### [Example 1]

A secondary pulverized product (lithium ion conductive solid electrolyte material) and a lithium ion conductive solid electrolyte were obtained in the same manner as in Comparative Example 1, except that a zirconia ball with a diameter of 2 mm was used instead of the zirconia ball used in the secondary pulverization step in Comparative Example 1.

### [Example 2]

A secondary pulverized product (lithium ion conductive solid electrolyte material) and a lithium ion conductive solid electrolyte were obtained in the same manner as in Comparative Example 1, except that a zirconia ball with a diameter of 3 mm was used instead of the zirconia ball used in the secondary pulverization step in Comparative Example 1.

### [Example 3]

A secondary pulverized product (lithium ion conductive solid electrolyte material) and a lithium ion conductive solid electrolyte were obtained in the same manner as in Comparative Example 1, except that a zirconia ball with a diameter of 5 mm was used instead of the zirconia ball used in the secondary pulverization step in Comparative Example 1.

### [Comparative Example 2]

A secondary pulverized product (lithium ion conductive solid electrolyte material) and a lithium ion conductive solid electrolyte were obtained in the same manner as in Comparative Example 1, except that a zirconia ball with a diameter of 10 mm was used instead of the zirconia ball used in the secondary pulverization step in Comparative Example 1.

### <X-ray diffraction (XRD)>

The obtained solid electrolyte was disintegrated using an agate mortar for 30 minutes to obtain a powder for XRD measurement.

Using a powder X-ray diffraction analyzer, PANalytical MPD (manufactured by Spectris Co., Ltd.), X-ray diffraction measurement of the obtained powder for XRD measurement (Cu-Kα radiation (output: 45 kV, 40 mA), diffraction angle 2Θ = range of 10 to 50°, step width: 0.013°, incident side Sollerslit: 0.04 rad, incident side Anti-scatter slit: 2°, light receiving side Sollerslit: 0.04 rad, light receiving side Anti-scatter slit: 5 mm) was carried out to obtain an X-ray diffraction (XRD) pattern. The crystal structures and the content of each of the crystal structures were confirmed by carrying out Rietveld analysis of the obtained XRD pattern using the known analysis software RIETAN-FP (available on creator; Fujio Izumi's website "RIETAN-FP/VENUS system distribution file" (http://fujioizumi.verse.jp/download/download.html)).

The half width of the diffraction peak, derived from a crystal structure based on LiTa₂PO₈ and having the maximum intensity observed in the range of 20° ≤ 2θ ≤ 40° (hereinafter also referred to as "XRD half-width"), was confirmed. The results are shown in Table 1.

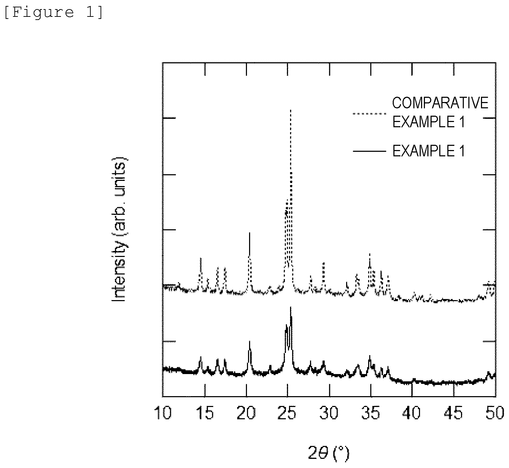

The XRD patters of the lithium ion conductive solid electrolyte materials obtained in Example 1 and Comparative Example 1 are shown in Figure 1.

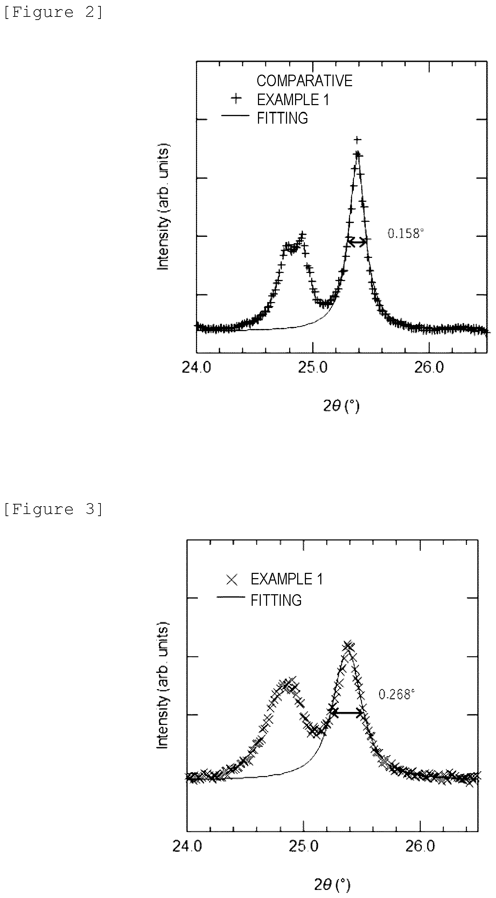

Furthermore, in the XRD patterns of the solid electrolyte materials obtained in Comparative Example 1 and Example 1, the fitting results of each diffraction peak having the maximum intensity in the range of 20° ≤ 2θ ≤ 40° by using the aforementioned software are shown in Figure 2 and Figure 3, respectively.

### <Relative density>

The mass of the manufactured lithium ion conductive solid electrolyte was measured using an electronic balance. Next, the volume was measured from the actual dimensions of the lithium ion conductive solid electrolyte using a micrometer. The density (measured value) of the lithium ion conductive solid electrolyte was calculated by dividing the measured mass thereof by the volume, and the relative density (%), which was a percentage of the ratio of the measured value of the density of the lithium ion conductive solid electrolyte to the theoretical value thereof (measured value of the density/theoretical value of the density × 100), was determined. The results are shown in Table 1.

It is noted that the theoretical value of the density of the lithium ion conductive solid electrolyte was taken as a theoretical density of a crystal structure based on LiTa₂PO₈ constituting the lithium ion conductive solid electrolyte.

### <Zirconium content (Zr content)>

Approximately 20 mg of the manufactured lithium ion conductive solid electrolyte material was accurately weighed in a platinum crucible, 1 g of potassium sodium carbonate and 0.5 g of boric acid were added, and the mixture was melted by a gas burner for 15 minutes. After having washed the outside of the crucible, the molten material, together with the entire crucible, was digested in 3 mL of 10% citric acid solution and 2 mL of 30% hydrogen peroxide solution, 3 mL of dilute sulfuric acid was added, and the mixture was then gently heated to dissolve the sample. Because of the residue present in the crucible, the residue was washed with hydrofluoric acid + sulfuric acid + a hydrogen peroxide solution, and following addition of internal standard elements (Co and Zn), the volume was fixed at 100 mL to obtain a sample solution. Using the obtained sample solution, the Zr content in a lithium ion conductive solid electrolyte material was measured twice by using an ICP-AES (Agilent 5110 manufactured by Agilent technologies Inc.), and an average of the two measurement values was used as the analysis result. The results are shown in Table 1.

**[Table 1]**

| | Zirconia ball diameter in secondary pulverization step (mm) | XRD half-width (°) | Relative density (%) | Zr content (atom%) |
|---|---|---|---|---|
| Comparative Example 1 | 1 | 0.158 | 89.0 | 0.00 |
| Example 1 | 2 | 0.268 | 95.7 | 0.21 |
| Example 2 | 3 | 0.224 | 94.6 | 0.30 |
| Example 3 | 5 | 0.214 | 93.2 | 1.69 |
| Comparative Example 2 | 10 | 0.128 | 73.4 | 4.08 |

It was found from Table 1 that the lithium ion conductive solid electrolyte produced by sintering the lithium ion conductive solid electrolyte material obtained by the method for producing the present material 2, has the high relative density and is considered to have excellent reliability.

## Claims

1. A method for producing a lithium ion conductive solid electrolyte material having a crystal structure based on LiTa₂PO₈ and having at least lithium, tantalum, phosphorus, oxygen, and zirconium as constituent elements, the method comprising:
a primary pulverization step of pulverizing a raw material substance to obtain a primary pulverized product, a firing step of firing the primary pulverized product to obtain a primary fired product, and a secondary pulverization step of pulverizing the primary fired product by using a ball mill to obtain a lithium ion conductive solid electrolyte material,
wherein, in the secondary pulverization step, a zirconia ball with a diameter of larger than 1 mm and smaller than 10 mm is used, and
a half-width of a diffraction peak of the lithium ion conductive solid electrolyte material, derived from a crystal structure based on LiTa₂PO₈ and having the maximum intensity observed in a range of 20° ≤ 2θ ≤ 40° in X-ray diffraction, is 0.160° or more.

2. The method for producing a lithium ion conductive solid electrolyte material according to claim 1, wherein the raw material substance is free of zirconium.

3. A method for producing a lithium ion conductive solid electrolyte, comprising a sintering step of sintering the lithium ion conductive solid electrolyte material obtained by the method for producing a lithium ion conductive solid electrolyte material according to claim 1 or 2 to obtain a lithium ion conductive solid electrolyte,
wherein a relative density that is a percentage of a ratio of a measured density calculated from a mass and a volume of the lithium ion conductive solid electrolyte to a theoretical density of the lithium ion conductive solid electrolyte is 75.0% or more.

4. A lithium ion conductive solid electrolyte material,
having a crystal structure based on LiTa₂PO₈, and
having at least lithium, tantalum, phosphorus, oxygen, and zirconium as constituent elements,
wherein a half-width of a diffraction peak having the maximum intensity observed in a range of 20° ≤ 2θ ≤ 40° in X-ray diffraction is 0.160° or more, and
a zirconium content is more than 0% by atom and 3.0% by atom or less.

5. The lithium ion conductive solid electrolyte material according to claim 4, further having a boron element.

6. A lithium ion conductive solid electrolyte,
having a crystal structure based on LiTa₂PO₈, and
having at least lithium, tantalum, phosphorus, oxygen, and zirconium as constituent elements,
wherein a relative density that is a percentage of a ratio of a measured density calculated from a mass and a volume of the lithium ion conductive solid electrolyte to a theoretical density of the lithium ion conductive solid electrolyte is 75.0% or more.

7. The lithium ion conductive solid electrolyte according to claim 6, further having a boron element.

8. An all-solid-state battery, comprising:
a positive electrode having a positive electrode active material;
a negative electrode having a negative electrode active material; and
a solid electrolyte layer between the positive electrode and the negative electrode,
wherein the solid electrolyte layer comprises the lithium ion conductive solid electrolyte according to claim 6 or 7.

9. The all-solid-state battery according to claim 8, wherein
the positive electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈(PO₄)₃, LiNi_{1/3}Co_{1/3}Mm_{1/3}O₂, LiCoO₂, LiNiO₂, LiMn₂O₄, Li₂CoP₂O₇, Li₃V₂(PO₄)₃, Li₃Fe₂(PO₄)₃, LiNi_{0.5}Mn_{1.5}O₄, and Li₄Ti₅O₁₂,
M3 is one or more elements selected from the group consisting of Mn, Co, Ni, Fe, Al, Ti, and V, or two elements V and O,
M5 is one or more elements selected from the group consisting of Fe, Mn, Co, Ni, Al, and Ti,
M6 is one or more elements selected from the group consisting of Fe, Mn, Co, Ni, Al, Ti, and V, or two elements V and O,
2 ≤ x7 ≤ 4, 1 ≤ y7 ≤ 3, 0 ≤ z7 ≤ 1, 1 ≤ y7 + z7 ≤ 3, and M7 is one or more elements selected from the group consisting of Ti, Ge, Al, Ga, and Zr,
0 ≤ x8 ≤ 0.8, and M8 is one or more elements selected from the group consisting of Ti and Ge.

10. The all-solid-state battery according to claim 8, wherein
the negative electrode active material comprises one or more compounds selected from the group consisting of LiM3PO₄, LiM5VO₄, Li₂M6P₂O₇, LiVP₂O₇, Liₓ₇V_{y7}M7_{z7}, Li₁₊ₓ₈Alₓ₈M8₂₋ₓ₈(PO₄)₃, (Li_{3-a9x9+(5-b9)y9}M9ₓ₉)(V_{1-y9}M10_{y9})O₄, LiNb₂O₇, Li₄Ti₅O₁₂, Li₄Ti₅PO₁₂, TiO₂, LiSi, and graphite,
M3 is one or more elements selected from the group consisting of Mn, Co, Ni, Fe, Al, Ti and V, or two elements V and O;
M5 is one or more elements selected from the group consisting of Fe, Mn, Co, Ni, Al and Ti;
M6 is one or more elements selected from the group consisting of Fe, Mn, Co, Ni, Al, Ti and V, or two elements V and O;
2 ≤ x7 ≤4, 1 ≤ y7 ≤3, 0 ≤ z7 ≤1, 1 ≤ y7+z7 ≤3, and M7 is one or more elements selected from the group consisting of Ti, Ge, Al, Ga and Zr,
0 ≤ x8 ≤ 0.8, and M8 is one or more elements selected from the group consisting of Ti and Ge, and
M9 is one or more elements selected from the group consisting of Mg, Al, Ga, and Zn, M10 is one or more elements selected from the group consisting of Zn, Al, Ga, Si, Ge, P, and Ti, 0 ≤ x9 ≤ 1.0, 0 ≤ y9 ≤ 0.6, a9 is an average valence of M9, and b9 is an average valence of M10.

11. An all-solid-state battery, comprising:
a positive electrode having a positive electrode active material,
a negative electrode having a negative electrode active material, and
a solid electrolyte layer between the positive electrode and the negative electrode,
wherein the positive electrode, the negative electrode and the solid electrolyte layer comprise the lithium ion conductive solid electrolyte according to claim 6 or 7.
